# EUROPÄISCHE PATENTSCHRIFT

(11) **EP 2 374 671 B1**
(45) Veröffentlichungstag und Bekanntmachung des Hinweises auf die Patenterteilung: **08.01.2014**
(21) Anmeldenummer: 10192570.9
(22) Anmeldetag: 25.11.2010
(51) Int. Cl.: B60S 9/08, B66F 17/00

(54) **Abstützvorrichtung für Lastfahrzeuge**
Support device for lorries
Dispositif d'appui pour poids lourds

(43) Veröffentlichungstag der Anmeldung: 12.10.2011
(73) Patentinhaber: Metalsa Automotive GmbH, 51702 Bergneustadt (DE)
(72) Erfinder: Dr. Hellweg, Hans-Bernd, 53819, Neunkirchen-Seelscheid (DE); Helsper, Michael, 57078, Siegen (DE); Mika, Frank, 51588, Nümbrecht (DE)
(74) Vertreter: Kalkoff & Partner

(56) Entgegenhaltungen:
- DE-A1- 19 756 426
- DE-A1-102004 012 966
- DE-U1-202005 018 217
- US-A1- 2005 023 798

## Beschreibung

Die Erfindung betrifft eine Abstützvorrichtung für Lastfahrzeuge, insbesondere Auflieger, mit einem mit dem Lastfahrzeug verbindbaren Gehäusekörper und einem in einem ersten Betriebszustand manuell gegenüber dem Gehäusekörper zwischen einer Lagerungsposition und einer Stützposition vertikal zum Lastfahrzeug verschiebbar angeordneten Stützkörper.

Derartige Abstützvorrichtungen, bspw. Kurbelstützen, dienen bei Aufliegern, bzw. Sattelaufliegern oder Sattelanhängern, welche im Rahmen der Anmeldung ebenfalls zu den Lastfahrzeugen, wie bspw. LKW gezählt werden, dazu, den Auflieger, welcher durch eine Zugmaschine bewegt werden kann, in einem von der Zugmaschine entkoppelten Zustand so abzustützen, dass der Auflieger in einer im wesentlichen horizontalen Position gehalten wird. Die Abstützung des Aufliegers erfolgt dabei über den vertikal verlagerbaren Stützkörper, welcher mit einem unteren Ende in der Stützposition auf dem Untergrund aufliegt. Die Abstützvorrichtung ist dabei über einen Gehäusekörper mit dem Lastfahrzeug, insbesondere dem Auflieger - in der Regel mit dessen Rahmen - starr verbunden, um eine zuverlässige Abstützung erreichen zu können.

Bekannte Abstützvorrichtungen der eingangs genannten Art lassen sich allein zu dem vorgenannten Zweck der Abstützung im entkoppelten Zustand einsetzen und erfüllen darüber hinaus keine weiteren Funktionen. Insofern ist eine Verstellung der Abstützvorrichtung bei bekannten Systemen allein im Stillstand des Lastfahrzeuges möglich, um ein Entkoppeln eines Aufliegers von einer Zugmaschine vorzubereiten. Eine weitergehende Nutzungsmöglichkeit der Abstützvorrichtung besteht überdies jedoch nicht.

Eine gattungsgemäße Abstützvorrichtung sowie ein gattungsgemäßer Auflieger sind aus dem Dokument DE-A-19756426 bekannt.

Der Erfindung liegt die Aufgabe zugrunde, eine Abstützvorrichtung der eingangs genannten Art in einem erweiterten Rahmen nutzbar zu machen.

Die Erfindung löst die Aufgabe durch eine Abstützvorrichtung mit den Merkmalen des Anspruchs 1 sowie durch einen Auflieger mit den Merkmalen des Anspruchs 9. Vorteilhafte Weiterbildungen der Erfindung sind in den abhängigen Ansprüchen angegeben. Kennzeichnend für die erfindungsgemäße Abstützvorrichtung ist, dass der Stützkörper in einem zweiten Betriebszustand mittels einer Antriebseinheit selbsttätig in Richtung auf die Stützposition verschiebbar ist, wobei der zweite Betriebszustand derart ausgebildet ist, dass die Antriebseinheit eine Verlagerung des Stützkörpers in Richtung auf die Stützposition bewirkt, wenn eine mit der Antriebseinheit verbundene Steuereinheit einen kritischen Fahrzustand des Lastfahrzeugs ermittelt.

Gemäß der Erfindung weist die Abstützvorrichtung neben dem ersten Betriebszustand, in dem im Stillstand des Lastfahrzeuges der Stützkörper manuell, d. h. von Hand aktiviert bzw. betätigt in Richtung auf die Stützposition verlagerbar ist einen zweiten Betriebszustand auf, der im Fahrbetrieb des Lastfahrzeugs aktiv ist. Im zweiten Betriebszustand erfolgt eine Verlagerung des Stützkörpers in Richtung der Stützposition, wenn ein kritischer Fahrzustand des Lastfahrzeugs ermittelt wird, wobei ein kritischer Fahrzustand dann vorliegt, wenn ein Umkippen des Lastfahrzeugs droht. Das Vorliegen eines kritischen Fahrzustandes ist dabei von einer reihe von Faktoren abhängig, zu denen u. a. die Neigungsrate des Fahrzeugs, dessen Kippwinkel und die geschwindigkeitsabhängige Winkelbeschleunigung zählt. Der Stützkörper stützt im Gefahrenfall, d. h. wenn das Lastfahrzeug droht umzukippen, den Auflieger gegenüber dem Untergrund ab und verhindert wirkungsvoll ein Umstürzen des Lastfahrzeuges, bspw. eines Aufliegers. Um eine Verlagerung des Stützkörpers im Falle eines drohenden Umkippens zu bewirken, weist die Abstützvorrichtung eine Antriebseinheit sowie eine mit der Antriebseinheit verbundene Steuereinheit auf. Die Steuereinheit überwacht dabei laufend den Betriebszustand bzw. Fahrzustand des Lastfahrzeuges, insbesondere den Neigungswinkel des Lastfahrzeuges gegenüber dem Fahrzeuguntergrund und löst im Falle eines Vorliegens eines kritischen Fahrzustandes eine Antriebseinheit aus, welche eine Verstellung des Stützkörpers in Richtung auf die Stützposition bewirkt.

Die erfindungsgemäße Abstützvorrichtung gewährleistet somit durch den zweiten Betriebszustand, dass einem Umkippen des Lastfahrzeuges wirksam vorgebeugt wird, so dass nach einer Normalisierung der Fahrsituation das Lastfahrzeug ungehindert ohne Beschädigung seine Fahrt fortsetzen kann. Der zweite Betriebszustand kann dabei zudem derart ausgebildet sein, dass die Steuereinheit nach Wegfall der Gefahrensituation die Antriebseinheit derart ansteuert, dass der Stützkörper in seine Lagerungsposition zurückverlagert wird. Insofern kann nach der möglichen Rückverlagerung des Stützkörpers das Lastfahrzeug in unveränderter Weise weiter genutzt werden, wobei durch die erfindungsgemäße Abstützvorrichtung nach wie vor ein Kippschutz besteht.

Um ein Umkippen des Lastfahrzeuges zu verhindern, ist es grundsätzlich nicht zwangsläufig erforderlich, dass der Stützkörper bis in die Stützposition verlagert wird. So kann auch durch die Verlagerung des Stützkörpers in eine zwischen der Stützposition und der Lagerungsposition befindlichen Zwischenposition eine ausreichende Abstützung gegen ein Umkippen des Lastfahrzeuges erreicht werden. Die Erfindung zeichnet sich dabei dadurch aus, dass für den ergänzenden Kippschutz keine separate Vorrichtung erforderlich ist. Dieser kann durch eine einfache und kostengünstige Anpassung bestehender Abstützvorrichtungen, bspw. Kurbelstützen erlangt werden, welche ihre ursprüngliche Funktion beibehalten. Es ist auch möglich, die erfindungsgemäßen Abstützvorrichtungen anstelle der herkömmlichen Stützvorrichtungen zu verwenden, nachdem deren Funktion durch die erfinderischen Abstützvorrichtungen erfüllt wird.

Um die sich mit dem zweiten Betriebszustand einstellende Kippschutzfunktion der Abstützvorrichtung zu gewährleisten, ist erforderlich, dass die Abstützvorrichtung eine Antriebseinheit zur selbsttätigen bzw. automatisierten Verstellung des Stützkörpers in Richtung auf die Stützposition aufweist. Die Ausgestaltung der Antriebseinheit ist dabei grundsätzlich frei wählbar, wobei nach einer besonders vorteilhaften Ausgestaltung der Erfindung diese einen hydraulischen, pneumatischen oder elektromotorischen Antrieb aufweist. Derartige Antriebe zeichnen sich dabei dadurch aus, dass sie eine besonders schnelle und zuverlässige Verstellung des Stützkörpers im Gefahrenfall ermöglichen. Darüber hinaus sind diese Antriebe dazu geeignet, eine vorteilhafte Rückverlagerung des Stützkörpers für den Fall zu bewirken, dass die Gefahrensituation, in der ein Umkippen des Lastfahrzeuges drohte, überwunden ist. Insbesondere elektromotorische Antriebe erlauben es, herkömmliche Abstützvorrichtungen in Form von Kurbelstützen in einfacher Weise weiterzubilden und diese mit der Möglichkeit der Einstellung eines zweiten Betriebszustandes zu versehen. Der elektromotorische Antrieb ist dabei derart mit dem Stützkörper verbunden, dass im Gefahrenfall eine sofortige Verlagerung des Stützkörpers erfolgt.

Die Antriebseinheit kann grundsätzlich allein zum Zwecke der Verlagerung des Stützkörpers in den zweiten Betriebszustand genutzt werden. Nach einer besonders vorteilhaften Ausgestaltung der Erfindung ist die Antriebseinheit jedoch auch im ersten Betriebszustand zur Verlagerung des Stützkörpers nutzbar. Gemäß dieser Weiterbildung der Erfindung ist es im ersten Betriebszustand nicht erforderlich, den Stützkörper durch manuelle Betätigung in die Stützposition zu verlagern. Vielmehr muss ein Bediener lediglich die Antriebseinheit aktivieren, wodurch dann der Stützkörper ohne manuellen Kraftaufwand in die Stützposition verlagert wird. Diese Weiterbildung der Erfindung steigert somit den Komfort der Abstützvorrichtung und erleichtert sowie beschleunigt im Falle der Anordnung an einem Auflieger ein An- und Abkoppeln des Aufliegers an einem Zugfahrzeug.

Wie bereits an obiger Stelle dargelegt, ist es für die Funktion des Kippschutzes nicht erforderlich, dass der Stützkörper bis in die Stützposition verlagert wird. Wesentlich für die Funktion ist, dass im Belastungsfall, d. h. wenn der Stützkörper im Gefahrenfall das Lastfahrzeug gegenüber dem Untergrund abstützt, der Stützkörper in seiner relativen Position gegenüber dem Gehäusekörper verbleibt, um eine ausreichende Stützwirkung zu erzielen.

Nach einer besonders vorteilhaften Ausgestaltung der Erfindung ist der Stützkörper im gegenüber der Lagerungsposition in Richtung auf die Stützposition verlagerten und/oder teilverlagerten Zustand gegen Rückverlagerung in Richtung auf die Lagerungsposition gesichert. Gemäß dieser Ausgestaltung der Erfindung ist der Stützkörper in jeder Position, die dieser ausgehend von der Lagerungsposition gegenüber dem Gehäusekörper einnehmen kann, gegen eine Rückverlagerung gesichert, so dass in besonders zuverlässiger Weise gewährleistet werden kann, dass der das Lastfahrzeug gegenüber dem Untergrund abstützende Stützkörper nicht in Richtung auf den Gehäusekörper rückverlagert wird.

Die Ausgestaltung der Sicherung kann dabei in beliebiger Weise erfolgen, bspw. ist dies über ein Zahnstangenprofil oder andersartig gestaltete mechanische Elemente oder über eine Selbsthemmung der den Stützkörper antreibenden Antriebseinheit in einfacher Weise realisierbar. So kann im Falle der Verwendung eines Spindelantriebs dieser bspw. so ausgelegt sein, dass eine Selbsthemmung gegeben ist, so dass auf weitere mechanische Elemente zur Positionssicherung verzichtet werden kann. Auch die Ausgestaltung hydraulischer oder pneumatischer Antriebe kann derart erfolgen, dass diese eine Rückverlagerung des Stützkörpers verhindern, so dass auf ergänzende mechanische, bspw. Rastierungselemente verzichtet werden kann.

Die Ausgestaltung des Stützkörpers kann grundsätzlich in beliebiger Weise erfolgen, sofern gewährleistet ist, dass dieser den im ersten und zweiten Betriebszustand auftretenden Belastungen Stand hält. In seiner einfachsten Ausgestaltung kann der Stützkörper durch ein einfaches Profil- oder Rohrelement gebildet sein, welches gegenüber dem Gehäusekörper verlagerbar ist, bspw. in diesem verschiebbar gelagert ist. Nach einer besonders vorteilhaften Ausgestaltung der Erfindung weist der Stützkörper an seinem dem Gehäusekörper abgewandten Ende ein Bodenkontaktelement auf. Das Bodenkontaktelement, welches an die im ersten und zweiten Betriebszustand auftretende Belastung angepasst sein kann, gewährleistet in besonderem Maße, eine gleichmäßige Lasteinleitung in den Stützkörper, wobei das Bodenkontaktelement darüber hinaus auch derart ausgebildet sein kann, dass es die Einleitung von Querkräften in den Stützkörper im Falle des Bodenkontaktes weitestgehend verhindert. Hierzu ist das Bodenkontaktelement nach einer besonders vorteilhaften Ausgestaltung der Erfindung durch eine drehbare Rolle oder Gleitplatte gebildet, welche im Fahrbetrieb weitestgehend verhindert, dass Querkräfte auf den Stützkörper wirken, welche zu einer den Stützkörper schädigende Belastung führen können.

Die Ausgestaltung des Stützkörpers ist im Übrigen grundsätzlich frei wählbar, wobei aus Kostengründen besonders vorteilhafterweise der Stützkörper in der aus erprobten Stützvorrichtungen, wie Kurbelstützen, bekannten Weise verwendet wird. Nach einer besonders vorteilhaften Ausgestaltung der Erfindung ist der Stützkörper jedoch gegenüber dem Gehäusekörper teleskopierbar, wodurch die Möglichkeit besteht, die Abstützvorrichtung in der Lagerungsposition des Stützkörpers besonders klein auszugestalten, so dass diese nur einen geringen Bauraum am Fahrzeug einnimmt.

Kennzeichnend für den erfindungsgemäßen Auflieger mit einer an einem Rahmen angeordneten Stützvorrichtung zur Aufstellung des Aufliegers in einer von einem Zugfahrzeug entkoppelten Stellung ist, dass die Abstützvorrichtung einen ersten Betriebszustand, in dem der Stützkörper manuell gegenüber dem Gehäusekörper zwischen einer Lagerungsposition und einer Stützposition vertikal zum Auflieger verstellbar ist und einen zweiten Betriebszustand, in dem der Stützkörper mittels einer Antriebseinheit selbsttätig in Richtung auf die Stützposition verschiebbar ist, wobei der zweite Betriebszustand derart ausgebildet ist, dass die Antriebseinheit eine Verlagerung des Stützkörpers in Richtung auf die Stützposition bewirkt, wenn eine mit der Antriebseinheit verbundene Steuereinheit einen kritischen Fahrzustand des Aufliegers ermittelt, aufweist.

Der erfindungsgemäße Auflieger zeichnet sich dabei dadurch aus, dass die Stützvorrichtung nicht nur ein Abstellen des Aufliegers im vom Zugfahrzeug entkoppelten Zustand ermöglicht, sondern darüber hinaus auch eine Kippschutzvorrichtung aufweist, welche zuverlässig im Gefahrenfall ein Umstürzen des Aufliegers verhindert. Hohen Sachschäden am Fahrzeug sowie Schäden am zu transportierenden Gut können hierdurch in besonders wirkungsvoller Weise verhindert werden. Die erfindungsgemäße Ausgestaltung der Stützvorrichtung ermöglicht es dabei, herkömmliche Stützvorrichtungen, wie Kurbelstützen in einfacher und kostengünstiger Weise weiterzubilden, so dass diese neben ihrer herkömmlichen Funktion eine weitere Funktion, nämlich eine Kippschutzfunktion erfüllen.

Die Anordnung der Stützvorrichtung an dem Auflieger kann dabei in der bekannten Weise erfolgen, wobei nach einer besonders vorteilhaften Ausgestaltung der Erfindung vorgesehen ist, dass die Stützvorrichtung im Bereich der Fahrzeugaußenseiten angeordnet sind, wodurch ein besonders guter Kippschutz erzielt wird, da gegenüber in Richtung auf die Fahrzeugmitte angeordneten Abstützvorrichtungen eine verbesserte Hebelwirkung erzielt werden kann.

Nachfolgend wird ein Ausführungsbeispiel der Erfindung anhand von Zeichnungen erläutert. In den Zeichnungen zeigen:
- Fig. 1: eine perspektivische Ansicht einer Stützvorrichtung in einer Lagerungsposition sowie einer Stützposition;
- Fig. 2: eine perspektivische Ansicht der Abstützvorrichtung von Fig. 1 im montierten Zustand an einem Auflieger und
- Fig. 3: eine Seitenansicht eines mit einer Abstützvorrichtung versehenen Aufliegers an einem Zugfahrzeug.

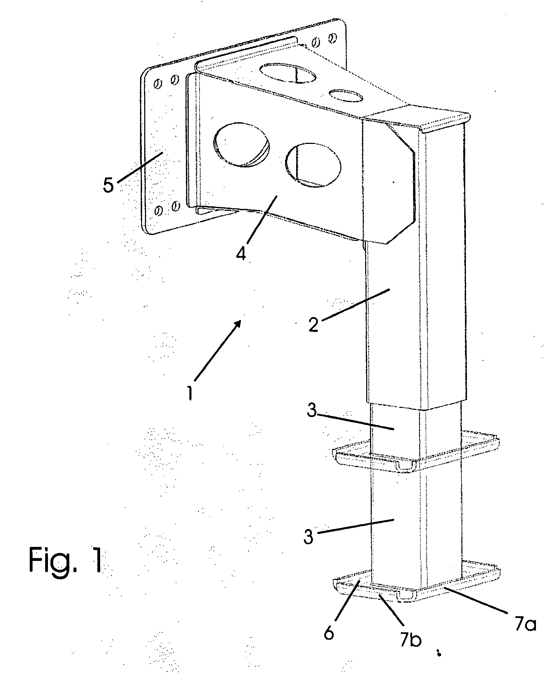

In Fig. 1 ist in einer perspektivischen Ansicht eine Ausführungsform einer Abstützvorrichtung 1 dargestellt. Diese weist einen Gehäusekörper 2 auf, welcher über ein starres Anschlusselement 4 mit einer Sockelplatte 5 verbunden ist, wobei über die Sockelplatte 5 die Abstützvorrichtung 1 an einer Rahmenstruktur 8 eines Aufliegers 9 befestigbar ist.

Die Abstützvorrichtung 1 weist einen verschiebbar in dem Gehäusekörper 2 angeordneten Stützkörper 3 auf, wobei der Stützkörper 3 zwischen der in Figur 1 dargestellten eingefahrenen Lagerungsposition und der ebenfalls in Fig. 1 dargestellten ausgefahrenen Stützposition verstellbar ist. Zur Verstellung des Stützkörpers 3 dient eine hier nicht dargestellte Antriebseinheit, welche über eine hier ebenfalls nicht dargestellte Steuereinheit bedienbar ist, wobei die Steuereinheit im Falle der Detektierung eines kritischen Fahrzustands, durch den ein Umkippen des Aufliegers 9 droht, die Antriebseinheit aktiviert, wodurch der Stützkörper 3 in die Stützposition verlagert wird. Nach Beendigung der Gefahrensituation, welche ebenfalls über die Steuereinheit 1 erkennbar ist, bewirkt diese eine erneute Ansteuerung der Antriebseinheit, wodurch der Stützkörper 3 in die Lagerungsposition zurückverlagert wird, wodurch ein Weiterbetrieb des Fahrzeugs möglich ist.

An seinem dem Gehäusekörper 2 abgewandten Ende weist der Stützkörper 3 eine Gleitplatte 6 auf, welche abgewinkelte Seitenflächen 7 aufweist, durch die gewährleistet ist, dass im Falle eines Bodenkontaktes, der Stützkörper 3 über den Untergrund gleitet und es nicht zu einem Verhaken des Stützkörpers 3 im Untergrund kommt.

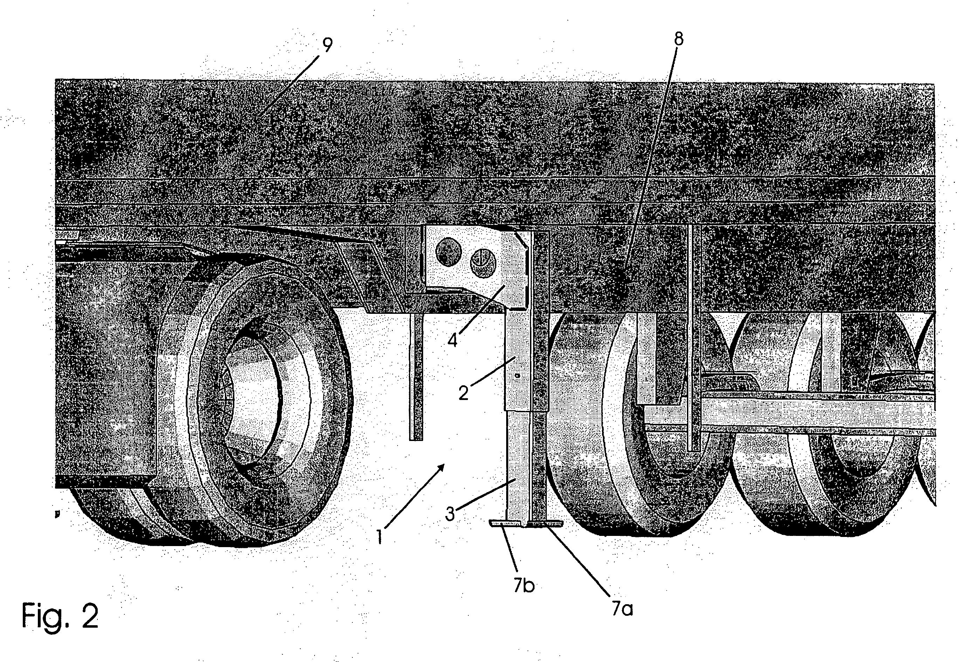

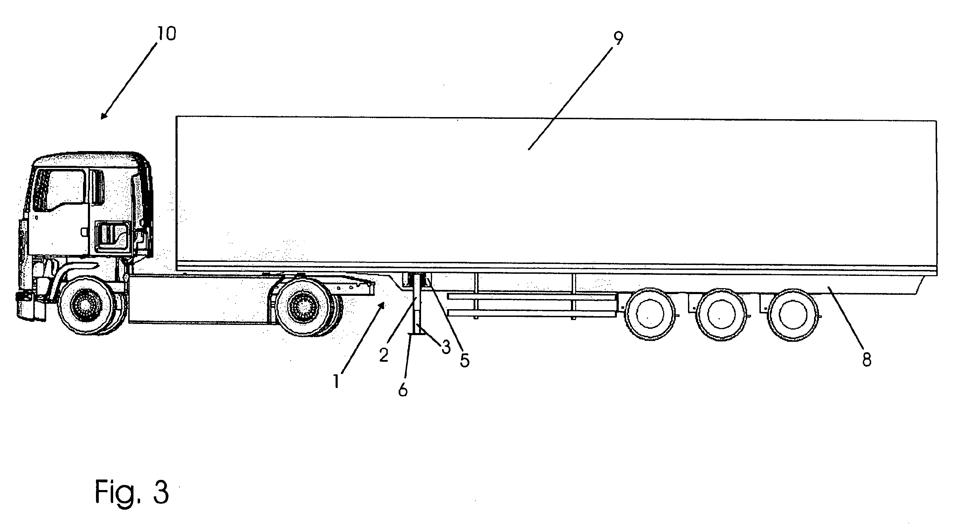

Die Anordnung der Abstützvorrichtung 1 an einem Auflieger 9 erfolgt, wie aus den Figuren 2 und 3 ersichtlich, am Rahmen des Aufliegers 9 derart, dass der Stützkörper 3 und der Gehäusekörper 2 möglichst im Bereich der Fahrzeugaußenseite angeordnet sind, um im Gefahrenfall eine gute Abstützung gewährleisten zu können. Gleichzeitig erlaubt die fahrzeugau-βenseitige Anordnung eine gute Zugänglichkeit der Abstützvorrichtung 1, so dass im Falle einer Abkopplung einer Zugmaschine 10 die Abstützvorrichtung 1 leicht zugänglich ist.

## Patentansprüche

1. Abstützvorrichtung für Lastfahrzeuge, insbesondere Auflieger, mit einem mit dem Lastfahrzeuge verbindbaren Gehäusekörper und einem in einem ersten Betriebszustand manuell gegenüber dem Gehäusekörper zwischen einer Lagerungsposition und einer Stützposition vertikal zum Lastfahrzeug verschiebbar angeordneten Stützkörper, **dadurch gekennzeichnet, dass** der Stützkörper (3) in einem zweiten Betriebszustand mittels einer Antriebseinheit selbsttätig in Richtung auf die Stützposition verschiebbar ist, wobei der zweite Betriebszustand derart ausgebildet ist, dass die Antriebseinheit eine Verlagerung des Stützkörpers (3) in Richtung auf die Stützposition bewirkt, wenn eine mit der Antriebseinheit verbundene Steuereinheit einen kritischen Fahrzustand des Lastfahrzeuges (9) ermittelt.

2. Abstützvorrichtung nach Anspruch 1, **dadurch gekennzeichnet, dass** die Antriebseinheit einen hydraulischen, pneumatischen oder elektromotorischen Antrieb aufweist.

3. Abstützvorrichtung nach Anspruch 1 oder 2, **dadurch gekennzeichnet, dass** die Antriebseinheit im ersten Betriebszustand zur Verlagerung des Stützkörpers (3) nutzbar ist.

4. Abstützvorrichtung nach einem der vorhergehenden Ansprüche, **dadurch gekennzeichnet, dass** der Stützkörper (3) im gegenüber der Lagerungsposition in Richtung auf die Stützposition verlagerten und/oder teilverlagerten Zustand gegen Rückverlagerung in Richtung auf die Lagerungsposition gesichert ist.

5. Abstützvorrichtung nach einem der vorhergehenden Ansprüche, **dadurch gekennzeichnet, dass** die Antriebseinheit eine Rückverlagerung des Stützkörpers (3) verhindert.

6. Abstützvorrichtung nach einem der vorhergehenden Ansprüche, **dadurch gekennzeichnet, dass** der Stützkörper (3) an seinem dem Gehäusekörper abgewandten Ende ein Bodenkontaktelement (6) aufweist.

7. Abstützvorrichtung nach einem der vorhergehenden Ansprüche, **dadurch gekennzeichnet, dass** das Bodenkontaktelement durch eine drehbare Rolle oder Gleitplatte (6) gebildet ist.

8. Abstützvorrichtung nach einem der vorhergehenden Ansprüche, **dadurch gekennzeichnet, dass** der Stützkörper (3) gegenüber dem Gehäusekörper (2) teleskopierbar zwischen der Lagerungsposition und der Stützposition verstellbar ist.

9. Auflieger mit einer an einem Rahmen (8) angeordneten Abstützvorrichtung (1) zur Aufstellung des Aufliegers (9) in einer einem Zugfahrzeug entkoppelten Stellung, wobei die Abstützvorrichtung (1)
- einen ersten Betriebszustand, in dem der Stützkörper (3) manuell gegenüber dem Gehäusekörper (2) zwischen einer Lagerungsposition und einer Stützposition vertikal zum Auflieger (9) verstellbar ist aufweist; **dadurch gekennzeichnet, dass** die Abstützvorrichtung
- einen zweiten Betriebszustand, in dem der Stützkörper (3) mittels einer Antriebseinheit selbsttätig in Richtung auf die Stützposition verschiebbar ist, wobei der zweite Betriebszustand derart ausgebildet ist, dass die Antriebseinheit eine Verlagerung des Stützkörpers (3) in Richtung auf die Stützposition bewirkt, wenn eine mit der Antriebseinheit verbundene Steuereinheit einen kritischen Fahrzustand des Aufliegers (9) ermittelt,
aufweist.

10. Auflieger nach Anspruch 9, **dadurch gekennzeichnet, dass** die Abstützvorrichtung gemäß einem oder mehreren der Ansprüche 1 - 8 ausgebildet ist.

## Claims

1. A support device for lorries, particularly trailers, having a housing body that can be connected to the lorry, and a support body, disposed in a first operating state movable manually with respect to the housing body between a storage position and a support position vertical to the lorry, **characterized in that** the support body (3) in a second operating state can be moved automatically by means of a drive unit, in the direction of the support position, wherein the second operating state is designed such that the drive unit causes a displacement of the support body (3) in the direction of the support position, when a control unit connected to the drive unit detects a critical driving state of the lorry (9).

2. The support device according to claim 1, **characterized in that** the drive unit has a hydraulic, pneumatic or electric motor drive.

3. The support device according to claim 1 or 2, **characterized in that** the drive unit can be used in the first operating state for displacement of the support body (3).

4. The support device according to one of the preceding claims, **characterized in that** the support body (3) in the displaced or partially displaced state with respect to the storage position, in the direction of the support position, is secured against return displacement into the storage position.

5. The support device according to one of the preceding claims, **characterized in that** the drive unit prevents a return displacement of the support body (3).

6. The support device according to one of the preceding claims, **characterized in that** the support body (3) on the end thereof facing away from the housing body, has a ground contact element (6).

7. The support device according to one of the preceding claims, **characterized in that** the ground contact element is formed by a rotatable roller or slide plate (6).

8. The support device according to one of the preceding claims, **characterized in that** the support body (3) can be moved with respect to the housing body (2), telescopable between the storage position and the support position.

9. A trailer having a support device (1) disposed at a frame (8), for positioning the trailer (9) in a position decoupled from a drawing vehicle, wherein the support device (1)
- has a first operating state, in which the support body (3) is movable manually with respect to the housing body (2) between a storage position and a support position vertical to the trailer (9);
**characterized in that** the support device
- has a second operating state in which the support body (3) can be moved automatically by means of a drive unit, in the direction of the support position, wherein the second operating state is designed such that the drive unit causes a displacement of the support body (3) in the direction of the support position, when a control unit connected to the drive unit detects a critical driving state of the trailer (9).

10. The trailer according to claim 9, **characterized in that** the support device is formed according to one or more of the claims 1 to 8.

## Revendications

1. Dispositif d'appui pour poids lourds, en particulier des semi-remorques, avec un corps de boîtier apte à être relié au poids lourd et un corps d'appui agencé de façon déplaçable manuellement par rapport au corps de boîtier et verticalement au poids lourd dans un premier état de fonctionnement, entre une position de stockage et une position d'appui, **caractérisé en ce que** dans un deuxième état de fonctionnement, le corps d'appui (3) peut être déplacé automatiquement vers la position d'appui au moyen d'une unité d'entraînement, dans lequel le deuxième état de fonctionnement est conçu de manière à ce que l'unité d'entraînement provoque un déplacement du corps d'appui (3) vers la position d'appui, lorsqu'une unité de commande reliée à l'unité d'entraînement détecte un état de conduite critique du poids lourd (9).

2. Dispositif d'appui selon la revendication 1, **caractérisé en ce que** l'unité d'entraînement comporte un entraînement hydraulique, pneumatique ou électromoteur.

3. Dispositif d'appui selon la revendication 1 ou 2, **caractérisé en ce que** dans le premier état de fonctionnement, l'unité d'entraînement peut être utilisée pour le déplacement du corps d'appui (3).

4. Dispositif d'appui selon l'une des revendications précédentes, **caractérisé en ce que** le corps d'appui (3) est bloqué contre un retour vers la position de stockage dans l'état déplacé et/ou partiellement déplacé vers la position d'appui par rapport à la position de stockage.

5. Dispositif d'appui selon l'une des revendications précédentes, **caractérisé en ce que** l'unité d'entraînement empêche un retour du corps d'appui (3).

6. Dispositif d'appui selon l'une des revendications précédentes, **caractérisé en ce que** le corps d'appui (3) comporte un élément de contact avec le sol (6) à son extrémité détournée du corps de boîtier.

7. Dispositif d'appui selon l'une des revendications précédentes, **caractérisé en ce que** l'élément de contact avec le sol est formé par un rouleau rotatif ou une plaque de glissement (6).

8. Dispositif d'appui selon l'une des revendications précédentes, **caractérisé en ce que** le corps d'appui (3) est déplaçable de façon télescopique par rapport au corps de boîtier (2), entre la position de stockage et la position d'appui.

9. Semi-remorque avec un dispositif d'appui (1) agencé sur un cadre (8) pour le montage de la semi-remorque (9) dans une position désaccouplée par rapport à un véhicule tracteur, dans laquelle le dispositif d'appui (1)
- présente un premier état de fonctionnement, dans lequel le corps d'appui (3) peut être déplacé manuellement par rapport au corps de boîtier (2) et verticalement à la semi-remorque (9), entre une position de stockage et une position d'appui, **caractérisée en ce que** le dispositif d'appui
- présente un deuxième état de fonctionnement, dans lequel le corps d'appui (3) peut être déplacé automatiquement vers la position d'appui au moyen d'une unité d'entraînement, dans laquelle le deuxième état de fonctionnement est conçu de manière à ce que l'unité d'entraînement provoque un déplacement du corps d'appui (3) vers la position d'appui, lorsqu'une unité de commande reliée à l'unité d'entraînement détecte un état de conduite critique de la semi-remorque (9).

10. Semi-remorque selon la revendication 9, **caractérisée en ce que** le dispositif d'appui est conçu selon l'une ou plusieurs des revendications 1 à 8.
